(19) Europäisches Patentamt
European Patent Office
Office européen des brevets

(11) **EP 3 176 321 A1**

(12) **EUROPEAN PATENT APPLICATION**

(43) Date of publication:
**07.06.2017 Bulletin 2017/23**

(51) Int Cl.:
***D21D 1/02*** *(2006.01)*      ***D21D 1/20*** *(2006.01)*

(21) Application number: **15198088.5**

(22) Date of filing: **04.12.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **SAPPI Netherlands Services B.V.
6211 AA  Maastricht (NL)**

(72) Inventors:
- **MOMIN, Saschi
London, N9 9JF (GB)**
- **JANSEN, Adrianus Johannes Ernst
6163 EX Geleen (NL)**

(74) Representative: **Schmitz, Joseph
Isler & Pedrazzini AG
Giesshübelstrasse 45
Postfach 1772
8027 Zürich (CH)**

(54) **PROCESS TO REDUCE THE OVERALL ENERGY CONSUMPTION IN THE PRODUCTION OF NANOCELLULOSE**

(57)     A process for reducing the overall energy consumption in the production of nanocellulose dispersions from a base cellulosic material wherein said process comprises an intermediate step reducing the overall energy consumption by at least 50% when compared to a process lacking said intermediate step.

x400      x500      x25000      x45000

3a      3b      3c      3d

**FIG. 3**

EP 3 176 321 A1

**Description**

TECHNICAL FIELD

The present invention relates to a process to reduce the overall energy consumption in the production of nanocellulose dispersions, as well as to an apparatus for carrying out said process.

PRIOR ART

WO201/4009517 A1 discloses a method to reduce the overall energy consumption in the production of nanocellulose, in which method the base cellulosic material to be processed is swollen in a swelling solution of morpholine or piperidine prior to being exposed to a high shear or high pressure treatment in a homogenizer such as for example a microfluidizer. The swelling of the base cellulosic material allows reducing the amount of energy needed to process the base cellulosic material into nanocellulose in the homogenizer. While this method has allowed to significantly reduce the overall energy consumption in the production of nanocellulose, it remains nonetheless desirable to further decrease the energy consumption in the production of nanocellulose.

WO2012/089930 A1 discloses a method and apparatus for producing nanocellulose, in which either mechanical or chemical pulp is introduced at low consistency into a conical refiner having a ring-shaped refining gap constantly inferior to 0.1 mm and moving the pulp through consecutive, but different, refining zones of the refiner. The pulp may or may not be chemically pre-processed by introducing functional groups other than in the original cellulose such as carboxymethyl, aldehyde, carboxyl (from TEMPO oxidation) or quaternary ammonium groups.

WO2012/072874 A1 discloses a method and system for producing nanocellulose in which pulp at low consistency is refined in a first refiner, then screened and precipitated and then refined in a second grit-surface refiner at low consistency. According to the applicant, this method allows to reduce the energy cost by 1/3 when compared to prior art methods. The refiners may be conical or disc refiners and the pulp may be chemically pre-treated by introducing cationic or carboxymethyl groups to the cellulose to reduce the energy consumption of the refiners and thus reduce the overall energy cost in the production of nanocellulose.

US 6,214,163 B1 discloses a process for producing super microfibrillated cellulose in which previously beaten pulp is passed through a rubbing apparatus such as a Masuko "Supergrinder" to yield a microfibrillated cellulose, and the microfibrillated cellulose is then passed through a high-pressure homogenizer such as a "Nanomizer" at low consistency to yield a suspension of cellulose fibers having an average fiber length of 0.05 to 0.1 mm.

WO2012/175806 A1 discloses a method and apparatus for producing nanocellulose, in which either mechanical or chemical pulp is introduced at low consistency into a disc refiner equipped with two opposing discs having a surface roughness smaller than 3 $\mu$m forming a narrow refining gap. The narrow refining gap and the roughness of the discs results in a more energy efficient production of nanocellulose when compared with a process in which the refiner used is a Masuko refiner, and the oxidation of the pulp with TEMPO yields an even more efficient production of nanocellulose (i.e. a higher viscosity for a given amount of energy consumed by the refiner)

SUMMARY OF THE INVENTION

The present invention provides for a process that allows for a reduction in the overall energy consumption in the production of nanocellulose dispersions from a base cellulosic material by adding an intermediate processing step that makes the homogenization of the cellulosic material more efficient.

The process for reducing the overall energy consumption in the production of a nanocellulose dispersion from a base cellulosic material according to the present invention provides for a process that comprises, in this order, (i) a step of swelling the base cellulosic material in a swelling solution until a predetermined amount of swelling is achieved to form a dispersion of swollen cellulosic material in the swelling solution, (ii) an intermediate step consisting of a step of comminuting the dispersion of swollen cellulosic material through low or medium shear to form a dispersion of comminuted cellulosic material in swelling solution having a predetermined degree of fineness and (iii) a step of homogenizing the dispersion of comminuted cellulosic material through high shear or high pressure to form the nanocellulose dispersion.

The present invention further provides for a process for reducing the overall energy consumption in the production of a nanocellulose dispersion from a base cellulosic material in which the swelling solution is an aqueous solution of morpholine, piperidine or mixtures thereof, preferably comprising of from 60 to 99% (by weight) morpholine, piperidine or mixtures thereof, more preferably of from 70 to 95% (by weight) of morpholine, piperidine or mixtures thereof, most preferably of from 73 to 83% (by weight) of morpholine, piperidine or mixtures thereof.

The present invention further provides for a process for reducing the overall energy consumption in the production of a nanocellulose dispersion from a base cellulosic material in which comminuting the dispersion of swollen cellulosic material through low or medium shear to form a dispersion of comminuted cellulosic material is carried out in a beater or refiner, preferably in a refiner, more preferably in a conical or double-disc refiner.

The present invention further provides for a process for reducing the overall energy consumption in the production of a nanocellulose dispersion from a base cellulosic material in which the process further includes, after (ii) and before (iii), a step (iia) of adding an amount of swelling solution chosen such as to form a dispersion of comminuted cellulosic material in swelling solution having a consistency being of from 2- to 25-times, or preferably of from 2- to 10 times, inferior to the consistency of the dispersion of comminuted cellulosic material in swelling solution of step (ii). Ideally, the consistency of the thus diluted comminuted is in the range of 0.5 to 2.5%.

The present invention further provides for a process for reducing the overall energy consumption in the production of a nanocellulose dispersion from a base cellulosic material in which prior to the step of homogenizing, the swelling solution of the dispersion of comminuted cellulosic material is exchanged for water in order to form a dispersion of comminuted cellulosic material in water, and nanocellulose dispersion formed in the step of homogenizing the formed dispersion of comminuted cellulosic material in water is in the form of a nanocellulose hydrogel.

The present invention further provides for a process for reducing the overall energy consumption in the production of a nanocellulose dispersion from a base cellulosic material in which prior to the step of homogenizing, the swelling solution of the dispersion of comminuted cellulosic material is exchanged for an organic solvent in order to form a dispersion of comminuted cellulosic material in said organic solvent, and nanocellulose dispersion formed in the step of homogenizing the formed dispersion of comminuted cellulosic material in water is in the form of a nanocellulose organogel, with the proviso that the organic solvent is chosen such that it is not capable of swelling or dissolving cellulose at standard conditions. In a preferred embodiment, the organic solvent is a C1 to C6 alcohol, preferably a monohydric alcohol such as a linear or branched C1-C6 alkyl alcohol or a C5-C6 cycloalkyl alcohol; a polyhydric alcohol such as C2-C3 diols or triols (ethylene glycol, propylene glycol or glycerol).

The present invention further provides for a process for reducing the overall energy consumption in the production of a nanocellulose dispersion from a base cellulosic material in which the low or medium shear to form a dispersion of comminuted cellulosic material in swelling solution is of no more than $7.5*10^6$ s$^{-1}$, or from $10^5$ to $7.5*10^6$ s$^{-1}$, or of from $10^6$ to $7.5*10^6$ s$^{-1}$ and/or the high shear to form the nanocellulose dispersion is of more than $7.5*10^6$ s$^{-1}$, or of from more than $7.5*10^6$ s$^{-1}$ to $1.5*10^7$ s$^{-1}$, and the high pressure is of no less than 5000 psi, or of from no less than 5000 psi to 65000 psi.

The present invention further provides for a nanocellulose dispersion obtained according to above process, in which at least 70% of the cellulose fibres of the nanocellulose dispersion have a fibre length of less no more than 1.20 mm and/or a mean fibril width of 5-30 nm and most preferably in the range of 5-20 nm.

The present invention further provides a hydrogel obtained according to the above process, wherein at least 70% of the cellulose fibres of the nanocellulose dispersion have a fibre length of less no more than 1.20 mm and/or a mean fibril width of 5-30 nm and most preferably in the range of 5-20 nm

The present invention further provides an organogel obtained according to the above process, wherein at least 70% of the cellulose fibres of the nanocellulose dispersion have a fibre length of less no more than 1.20 mm and/or a mean fibril width of 5-30 nm and most preferably in the range of 5-20 nm.

Further embodiments of the invention are laid down in the dependent claims.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1    shows a ccomparative "beating curve" data (SR Freeness vs Specific Refining Energy) for the refining of hardwood sulphite pulp (100% beech) in water and 78% w/w aqueous morpholine (the latter representing the intermediate comminution step of the present invention)

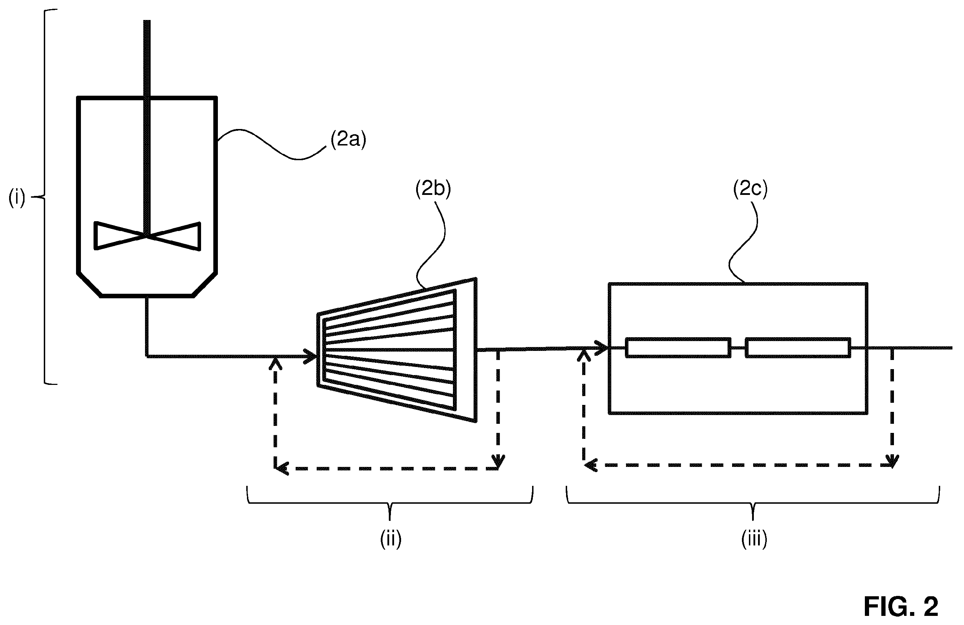

Fig. 2    shows a schematic of a process, where the steps (i), (ii) and (iii) correspond to a swelling step, a comminuting step and a homogenizing step, respectively. The swelling step employs a mixer (2a), the comminuting step employs a refiner (2b), and the homogenizing step is carried out in microfluidizer (2c).

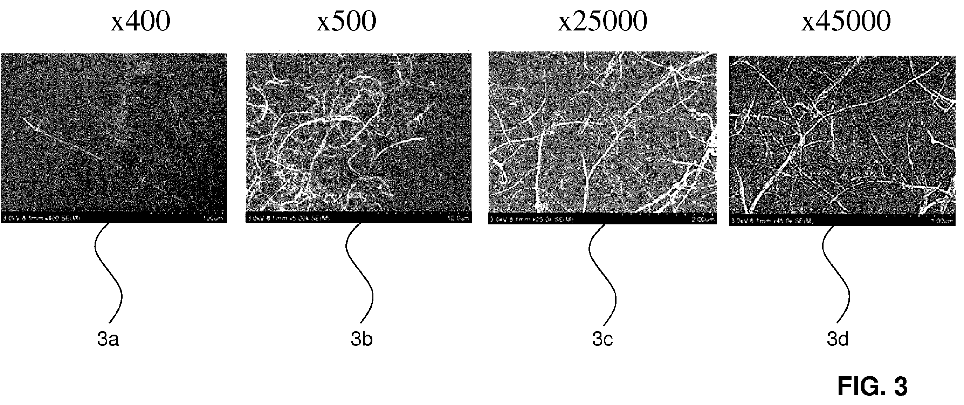

Fig. 3    shows the SEM images (3a, 3b, 3c, 3d) of single nanocellulose fibrils in a hydrogel obtained according to the process of the invention, at different magnifications (x400, x500, x25000, x45000).

DESCRIPTION OF PREFERRED EMBODIMENTS

In the context of the present invention, the expression "overall energy consumption in the production of nanocellulose dispersions from a base cellulosic material" means the energy required to operate the apparatuses needed for the production of nanocellulose from a base cellulosic material, in most cases a refiner and/or a microfluidizer.

In the context of the present invention, the term "nanocellulose" as used herein encompasses the (interchangeably used) term "nanofibrillated cellulose" or "NFC" and refers to cellulose particles which are characterized by having an elongated form, having an aspect ratio of >1, and having an average length in the range of 15-1200 nm, preferably in the range of 50-1000 nm, more preferably 70-800 nm. The average thickness is preferably in the range of 3-200 nm, preferably in the range of 5-100 nm, more preferably in the range of 5-30 nm and most preferably in the range of 5-20 nm. Nanocellulose may be chemically derivatized or it may be chemically non-derivatized, or native, and preferably for the purpose of the invention, the nanocellulose is native nanocellulose.

In the context of the present invention, the term "native nanocellulose" refers to nanocellulose that has not been derivatized chemically and which comprises, or consists of, essentially chemically intact domains of cellulose I allomorph.

In the context of the present invention, the term "consistency" refers to the solid content of cellulose by weight of a slurry or dispersion, based on the total weight of the slurry or dispersion.

In the context of the present invention, the term "base cellulosic material" as used herein includes but is not limited to the following type: microcrystalline cellulose, microbial cellulose, cellulose derived from marine or other invertebrates, wood pulp, chemical (dissolving) pulp, native biomass (in the form of plant fibres, stems or husks) and cellulosic man-made fibres such as tyre cord and other cellulose II sources such as mercerised cellulose. The base cellulosic material may or may not be chemically derivatized by for example carboxymethylation, carboxylation, oxidation, sulphation or esterification.

The base cellulosic material suitable for use in the process according to the present invention is preferably wood pulp, such as for example chemical wood pulp or recycled wood pulp. Other base cellulosic material may be chosen from micro-crystalline cellulose, as for example Avicel PH-101, from FMC Corporation and also textile or technical textile fibres, for example as supplied by Cordenka GmbH under the trade name of Cordenka 700 (Super 3) can be used as a starting source of base cellulosic material. The wood pulp can be sourced from ground wood fibres, recycled or secondary wood pulp fibres, bleached and unbleached wood fibres. Both softwoods and hardwoods can be utilised. In addition, suitable biomass materials such as bagasse and bamboo can also be used as a source of base cellulose material.

In the step of swelling the base cellulosic material in a swelling solution, the base cellulosic material is preferably mixed to a predetermined consistency with the swelling solution. The amount of base cellulosic material and swelling solution may in principle be freely adjusted, but it is preferable to adjust the consistency of the mixture of base cellulosic material and swelling solution such that the resulting swollen cellulosic material has a consistency suitable for efficient processing in the comminution apparatus. In general, commercially available comminution apparatuses can be run at consistency of from 2 to 15% or from 2 to 10%. For instance, in the case where the comminution apparatus is a refiner, a consistency of between 2 and 6% has been found to be useful. A person skilled in the art will know how to adjust the amounts of swelling solution and base cellulose material such that the desired target consistency in the swollen cellulosic material is reached.

The term "swelling solution" refers to either an aqueous solution of a swelling agent, pure swelling agent or a solution of swelling agent in an organic solvent.

The term "swelling agent" is defined as being a chemical compound or a composition thereof that can disrupt either the intercrystalline bonding or which can disrupt both the intercrystalline and partially (i.e. not fully) the intracrystalline bonding normally present in base cellulosic material.

Swelling agents that will only disrupt intercrystalline bonding (and at most will minimally affect intracrystalline structure), will only lead to swelling independent of the reaction conditions used. Such swelling agents will never lead to full solvation (which is a result of significant or full disruption of intracrystalline bonding) of the base cellulosic material. The extent of swelling is dependent on the interaction conditions.

Swelling agents that are able to disrupt both intercrystalline bonding and intracrystalline bonding may lead to either swelling (at most partial but not full disruption of intracrystalline bonding) or solvation (full disruption of of intracrystalline bonding) depending on the reaction conditions. Thus, the choice of reaction conditions will determine whether swelling or solvation is obtained. For the present invention, when using such a swelling agent that potentially fully disrupts also intercrystalline bonding, suitable reaction conditions, e.g. concentration, temperature, reaction time have to be chosen for obtaining swelling only (i.e. either achieving disruption of the intercrystalline bonding only or achieving disruption of the intercrystalline bonding and only partial (but not full) disruption of the intracrystalline bonding), but preventing complete solvation. Full disruption of intracrystalline bonding is not desired and has to be prevented in the present invention.

A suitable swelling agent can be an organic or inorganic swelling agent or a mixture thereof (in pure form or a solution thereof). It is understood that a swelling agent may be a solid or a liquid. A solid swelling agent may be dissolved or suspended in one or more suitable solvents such as water or organic solvent, a liquid swelling agent may be used in pure form or further diluted with one or more suitable solvents such as water or organic solvent to form a swelling solution.

A typical inorganic swelling agent includes inorganic bases such as an inorganic halide, which is an inorganic metal halide or inorganic pseudo metal halide or an inorganic hydroxide.

A typical organic swelling agent may include any organic swelling agents disclosed in the art, see, e.g. as cited in The Polymer Handbook 3rd edition, 1989 (published by J Wiley & Sons, edited by J Brandrup & EH Immergut), more specifically within the section "Properties of Cellulose Materials", specifically in the section "Solvents for Cellulose".

Suitable swelling agents for use in the present invention include, but are not limited to, (i) swelling agents, which are cellulose non-solvents which only swell the intercrystalline regions, such as morpholine, piperidine, and the like and (ii) swelling agents, which can swell both the intercrystalline and partially (but not fully) the intracrystalline regions. Some of these latter swelling agents can under specific reaction conditions also act as cellulose solvents (which is not desired for the purpose of the present invention). Suitable swelling agents that can swell both the intercrystalline and partially (but not fully) the intracrystalline regions of the base cellulosic materials could be alkali metal oxides, alkali metal hydroxides (e.g. potassium hydroxide, lithium hydroxide), alkaline earth metal oxides, alkaline earth metal hydroxides, alkali silicates, alkali aluminates, alkali carbonates, alkali thiocyanates, alkaline earth thiocyanates, alkali halides (e.g. chlorides, fluorides, bromides) amines, including aliphatic hydrocarbon amines, preferably lower aliphatic amines (e.g. trimethylamine, triethylamine), cupriethylenediamine, ammonia, ammonium hydroxide; tetramethyl ammonium hydroxide; trimethylbenzylammonium hydroxide; lithium chloride; tertiary amine oxides (e.g. N-methyl morpholine N-oxide), ionic liquids (e.g. 1-ethyl-3-methylimidazolium acetate), urea and mixtures thereof., zinc ammonium complex, zinc chloride, copper ammonium complex, silver ammonium complex, strontium hydroxide, barium hydroxide and the like, or mixtures thereof.

Suitable mixtures of swelling agents include a mixture of an organic swelling agent and an inorganic metal halide or pseudo-metal halide, e.g. a mixture of sodium thiocyanate and ethylenediamine,

Excluded from the scope of swelling agents for use in the present invention are any acid halides, e.g. hydrochloric acid, and conventional mineral acids, e.g. sulphuric, phosphoric and nitric acids.

In a preferred embodiment the swelling agent is an aqueous solution of morpholine, piperidine or mixtures thereof comprising of from 60 to 99% (by weight) morpholine, piperidine or mixtures thereof, or of from 70 to 95% (by weight) of morpholine, piperidine or mixtures thereof, more preferably of from 73 to 83% (by weight) of morpholine, piperidine or mixtures thereof.

In a further embodiment the liquid organic swelling agent is N-methyl morpholine N-oxide. Preferably, N-methyl morpholine N-oxide is used at a concentration of higher than 50 %, preferably higher than 70 %, but less than 81 %, at temperatures of higher than 80 °C, preferably higher than 85°C. Most preferred conditions for N-methyl morpholine N-oxide (NMMO) are at a concentration of 78 % w/w and 85 °C. Above these conditions (82 % w/w and 85 °C) it behaves as a solvent for base cellulosic material.

It is understood that a skilled person will know, that suitable reaction conditions, such as concentration of the swelling agent depends on the choice of swelling agent and its potential as a cellulose swelling agent. In particular when using a swelling agent which is also a recognised cellulose solvent, it is necessary to use it at below its dissolution concentration and/or temperature (which are known in the art, see e.g. The Polymer Handbook 3rd edition, 1989 (published by J Wiley & Sons, edited by J Brandrup & EH Immergut), more specifically within the section "Properties of Cellulose Materials", specifically in the section "Solvents for Cellulose") such that it acts as a cellulose swelling agent, i.e. prior to the stage of full disruption of all intracrystalline bonding in the base cellulosic material and its resultant dissolution.

Solvation should be preferably avoided, as complete disruption of the intracrystalline bonding will lead to destruction of the crystalline structure of the nanocellulose domains within the particles of the base cellulosic material.

The extent of swelling may be determined in various ways. In the context of the present invention, the extent of swelling has been found to be conveniently defined in terms of the apparent increase in the phase volume fraction of the base cellulosic material in the system, relative to the phase volume fraction of the same base cellulosic material suspended in water - the cellulose being in a powdered form amenable to processing via the intended mechanical technique.

In order to quantify the effectiveness of a given swelling agent or swelling solution (i.e. the extent of swelling), the base cellulosic material in powdered form (1.0 g) can be weighed into a 20 ml glass scintillation vial and the liquid swelling agent or swelling solution of interest (9.0 ml) is added by means of a micropipetting device. The system is then mixed via manual agitation to disperse the base cellulosic material in the continuous phase of swelling agent or swelling solution and allowed to equilibrate for 24 hours at 20 °C.

The base cellulosic material is expected to not enter into a true solution of molecularly dispersed chains - rather to absorb a proportion of the continuous phase, facilitated via disruption of intermolecular and intramolecular hydrogen bonding. The apparent phase volume fraction of the resultant swollen cellulose particles (and the associated interstitial fluid) is then estimated visually/macroscopically by means of a ruler with 1 mm graduations, with the heights of the upper (liquid supernatant, $h_{Upper}$) and lower (swollen cellulosic particles, $h_{Lower}$) phases being estimated to the nearest 0.01 mm. Use of a scintillation vial of cylindrical form (constant diameter/cross sectional area) conveniently allows cellulose phase volume fractions, $v_{Cell}$ to be simply estimated from measured phase heights ($v_{Cell} \approx h_{Lower} / (h_{Upper} + h_{Lower})$). An apparent swelling index, S, is then defined by the ratio of volume fractions of the swelling solution with reference to deionized water (S = $v_{Cell}$ (swelling solution) / $v_{Cell}$ (water)).

Alternatively, the extent of swelling may be determined following incubation at a temperature greater than ambient, as appropriate to the swelling solution of interest. In each case, an identical standard sample can be prepared using deionized water in place of the swelling solution.

In order to reduce the overall energy consumption in the production of nanocellulose, a swelling solution characterized by a swelling index, $S$, as defined above, of between 1 and 10, with a value between 1.5 and 3 being most preferred, can be chosen.

The step of swelling the base cellulosic material in a swelling solution until a predetermined amount of swelling is achieved to form a dispersion of swollen cellulosic material in the swelling solution can be carried out in a suitable receptacle such as for example a temperature-controlled receptacle equipped with an agitation means such as for example an impeller.

The predetermined amount of swelling is achieved by combining, preferably gradually combining, a swelling solution with a base cellulose material in a suitable receptacle under constant or interrupted agitation in order to disintegrate aggregates and form a dispersion of base cellulose material in swelling solution.

The time required for the thus formed dispersion of base cellulose material in swelling solution to reach the predetermined amount of swelling and form a dispersion of swollen cellulosic material in the swelling solution will depend on the base specific swelling solution, as well as in temperature and degree of agitation to which the dispersion of base cellulose material in swelling solution is exposed. In general, the optimum amount of swelling is reached when no further swelling can be reached by prolonging the swelling, which can easily be assessed by a single experiment per case. In the case where the swelling solution is an aqueous solution comprising of from 60 to 99% (by weight) morpholine and the base cellulosic material is microcrystalline cellulose, the amount of time needed to reach the optimum swelling is between 10 and 20 minutes at 25°C using a rotor-stator mixer operating at 10 000 RPM. On the other hand, using chemical dissolving pulp without agitation at 25 °C requires two hours of swelling in an aqueous solution comprising of from 60 to 99% (by weight) morpholine.

After the step of swelling the base cellulosic material, the present process for reducing the overall energy consumption in the production of a nanocellulose dispersion includes an intermediate step consisting of a step of comminuting the dispersion of swollen cellulosic material through low or medium shear to form a dispersion of comminuted cellulosic material in swelling solution having a predetermined degree of fineness. The low or medium shear applied corresponds to a shear of preferably no more than $7.5*10^6$ s$^{-1}$, or from $10^5$ to $7.5*10^6$ s$^{-1}$, or of from $10^6$ to $7.5*10^6$ s$^{-1}$, and of preferably from $4.0*10^6$ to $7.5*10^6$ s$^{-1}$, and more preferably of from $6.5*10^6$ s$^{-1}$ to $7.5*10^6$ s$^{-1}$. Alternatively, a shear of from $4.0*10^6$ to $6.5*10^6$ s$^{-1}$ can also be used.

The predetermined degree of fineness can for example be expressed as the Schopper-Riegler (SR) value. In one embodiment, a degree of fineness useful in the process according to the process of the invention can be SR value in excess of 75, or of from 75 to 95, or of from 75 to 90, when determined according to ISO 5267/1.

The dispersion of swollen cellulosic material can either be used as obtained, and if necessary can be preferably adjusted to a consistency of no more than 10% or of 0.1 to 10%, more preferably to a consistency of 2 to 6% and most preferably to a consistency of 3 to 5.5% in order to increase the energetic efficiency of the comminution apparatus. Adjusting the consistency of the dispersion of swollen material can be carried out by either evaporating part of the swelling solution in order to increase the consistency or diluting with swelling solution to decrease the consistency.

The comminution using low or medium shear may be exerted by a suitable comminution apparatus that mechanically treats the swollen cellulosic material through milling, grinding, beating, sonicating, or any other means to release nanofibrils and/or nanocrystals of the cellulosic base material. Essentially, any type of mill or device that physically separates fibers may be utilized. Such mills are well-known in the industry and include, without limitation, Valley beaters, single disk refiners, double disk refiners, conical refiners, including both wide angle and narrow angle, cylindrical refiners and other similar milling or grinding apparatus, excluding high pressure or high shear homogenizers such as microfluidizer which normally operate at high shear. See, for example, Smook, Handbook for Pulp & Paper Technologists, Tappi Press, 1992; and Hubbe et al., "Cellulose Nanocomposites: A Review," BioResources 3(3), 929-980 (2008). Preferably the treatment with low or medium shear is carried out with a refiner such as a conical or double disc refiner. In the case where the comminution apparatus is a refiner, the refiner gap is dependent on the tip speed and filling gap. For a refiner with a filling gap in the range of 0.01mm - 0.3mm, and rotor diameter of 0.825 m the shear when operating at a rotation speed of 1000 - 1500 rpm is in the range of $1.4 \times 10^5$ s$^{-1}$ and $7.5 \times 10^6$ s$^{-1}$.

In the refiner, the primary wall of the cellulose fibres is removed and thereby the smaller cellulose microfibrils are exposed. This is simplified by the previous swelling of the base cellulosic material and has the effect of requiring less energy input into the refiner to achieve a given fineness. According to the findings of the applicant, the reduction in energy consumption caused by the combination of first swelling and then using low or medium shear prior to homogenization through high shear or pressure is in the range of 50-80% when compared to the energy consumption required to achieve the same level of fineness using solely a combination of swelling and homogenizing through high shear or high pressure.

The degree of refining can be measured in the fineness of the produced dispersion of the comminuted cellulosic material and can be expressed in degrees Schopper-Riegler (°SR) or Canadian Standard Freeness. A suitable degree of fineness corresponds to a °SR value in excess of 75, or of from 75 to 95, or of from 75 to 90, when determined according to ISO 5267/1.

Once the predetermined degree of fineness is reached and the consistency of the dispersion of comminuted cellulosic material has been adjusted, the dispersion of comminuted cellulosic material is either homogenized as-is through high shear or high pressure to form the nanocellulose dispersion or the swelling solution of the dispersion of comminuted cellulosic material is previously exchanged for an organic solvent or water in order to form a dispersion of comminuted cellulosic material in said organic solvent or water.

In the case where an organic solvent is used, the organic solvent is chosen so that it is not capable of swelling or dissolving cellulose at standard conditions (25 °C, 1 atm). The organic solvent can be methanol, ethanol, iso- or n-propanol, any position isomer of butanol, pentanol or hexanol, cyclohexanol or cyclopentanol, ethylene glycol, propane-1,2-diol, propane-1,3-diol or glycerol.

The step of homogenizing of the dispersion of comminuted cellulosic material through high shear or high pressure to form a nanocellulose dispersion can be performed using conventional technologies known in the art, such as high shear forces, microfluidization, (e.g. a M110-EH Microfluidizer Processor fitted with two chambers in series), high pressure homogenization (e.g. a NanoDeBee high pressure homogenizer (BEE International Inc), a ConCor high pressure/high shear homogenizer (Primary Dispersions Ltd)), controlled hydro-dynamic cavitation (eg. using an Arisdyne Systems controlled flow cavitation device) and high friction forces (e.g. a Super MassColloider colloid/friction mill (Masuko)), and combinations thereof.

High pressure or high shear homogenizers rely on the generation of high mechanical stresses within the dispersion of comminuted cellulosic material to achieve a breakdown into the desired nanocellulose. This is achieved by pumping the dispersion of comminuted cellulosic material through a well-defined microfluidic interaction chamber - effectively a situation corresponding to a confined flow, as defined in the field of fluid dynamics.

The term "microfluidic", in the context of the present invention, refers to a confined flow geometry or interaction chamber, where the width orthogonal to the direction of flow is less than 500 microns, preferably between 400 and 50 microns. Commonly encountered interaction chamber designs include abrupt contractions (either axisymmetic or rectangular slots), Z-geometries (abrupt inflections in the path of the flow) and Y-geometries (where the flow is split and recombined as impinging/opposing jets). Each of the above interactions chamber designs are regarded as creating a complex flow, where the kinematics are such that both shear and tensile effects coexist (and thus it is not possible to define a single value of shear rate in complex flows of this type). This situation is clearly different to a so-called rheometrical flow - where the shear rate, shear stress and boundary conditions are well-defined, allowing material properties such as viscosity and first normal stress difference to be assigned a value characteristic of the fluid. Furthermore, geometries involving convergence of the streamlines/acceleration of the fluid (contractions, Z-geometries) or generation of a stagnation point (Y-geometry/opposing jets) are characterised by a high tensile or extensional component within the flow field - which makes a major contribution to the efficiency of mechanical fibrillation and dispersive mixing (but also further complicates defining a characteristic shear rate for the process).

The term 'high shear', in the context of use of a high shear homogenizer within the scope of the present invention, is best clarified via an illustrative example of the shear rate in a 50 micron radius ($R$) axisymmetric capillary (which may be considered as part of e.g. a Z-geometry used on an M110-EH Microfluidizer). A batch of MCC (5.0g, Avicel PH-101) dispersed in 80:20 vol% morpholine:water (500 ml) was seen to pass through such a geometry in 2 minutes at a operating pressure ($P$) of 25000 psi. This corresponds to a volume flow rate ($Q$) of 4.16 ml min$^{-1}$ and thus a shear rate (assuming steady flow and making no allowance for shear thinning of the fluid) of 42.4 x 10$^6$ s$^{-1}$.

Shear rate ($\dot{\gamma}$) in capillary (Poiseuille) flow may be conveniently estimated via the following expression:

$$\dot{\gamma} = \frac{4Q}{\pi R^3}$$

Given that the flow in e.g. the M110-EH Microfluidizer is pulsatile in character, the true peak value of the shear rate in this part of the interaction geometry could be much higher. Thus for the purposes of the present invention the operating range of processing apparatus of the high shear homogenizer type is between 8.5 x 10$^6$ s$^{-1}$ and 102 x 10$^6$ s$^{-1}$ (defined as above) and 5000 psi to 60000 psi, most preferably between 34 x 10$^6$ s$^{-1}$ and 72 x 10$^6$ s$^{-1}$ (defined as above) and 20000 psi to 42500 psi.

In general, the high shear needed to form the nanocellulose dispersion from the dispersion of comminuted cellulosic material is of more than 7.5*10$^6$ s$^{-1}$, or of from more than 7.5*10$^6$ s$^{-1}$ to 1.5*10$^7$ s$^{-1}$, and the high pressure is of no less than 5000 psi, or of from no less than 5000 psi to 65000 psi.

The concatenation of the three steps of swelling, comminuting and homogenizing the cellulosic material in order to obtain nanocellulose reduces the overall energy consumption dramatically by a factor of 2 to 3, when compared to a process in which the intermediate comminuting step is omitted. In other words, the energy invested into the intermediate comminution step results in a reduction of energy consumption in the homogenizing step that exceeds the energy invested into the intermediate step, thereby effectively reducing the overall energy consumption of the process.

The nanocellulose obtained in the process according to the invention has the appearance of a gel in which the nanocellulose is present as a dispersion in a liquid which may be, depending on the process, water, organic solvent or swelling solution.

Depending on its intended use, the nanocellulose dispersion can then be further processed into powder form or used in gel form.

EXAMPLES

**Example 1 - Preparation of a nanocellulose dispersion from wood pulp by high shear homogenization in a swelling solution**

Sulphite wood pulp (100% beech feedstock) in the form of a coarse powder (nominal size ~ 5mm), prepared by knife milling the sheets as supplied, and was slurried in a swelling solution of 78% w/w aqueous morpholine. The consistency of the slurry was fixed at 1% solids and the system was mixed for 10 minutes using a laboratory rotor stator mixer (Ultra Turrax, IKA), which was found to be sufficient time to afford disintegration of the pulp particles, giving a visually homogeneous appearance.

A 500 ml aliquot of the thus obtained pulp slurry was then subjected to a process of high shear homogenization using a M-110-EH microfluidizer processor (Idex Corp.) fitted with a 200 $\mu$m ceramic auxiliary processing module and 100 diamond interacton chamber arranged in series. The operating pressure drop was set at 25000 psi (1724 bar). This operating pressure was found previously to be most effective in terms of producing cellulose nanofibrils of the requisite quality with the minimum number of processing passes (mean fibril width, rheology, absence of large pulp fibre remnants). Methods for characterizing the quality of the cellulose nanofibrils so produced are outlined briefly below.

Light microscopy analysis was performed in order to give a qualitative measure of the amount of larger resistant fragments of the parent pulp fibres contaminating the desired nanoscale product. Briefly, a small aliquot (~ 2g) of the cellulose nanofibril slurry in the swelling solution was taken at an appropriate stage of the process and diluted by addition of deionized water (8 g). To this was added a solution of Congo Red stain (0.1% in water, 1 drop) and the sample mixed well. Digital imaging (x 200) was performed using an Leitz DMRX Optical Microscope fitted with a video camera. A qualitative visual assessment of the presence and amount of pulp fibre remnants (size typically ~ 20 $\mu$m, stained dark red) was made and assigned an appropriate descriptor by reference to a set of standard images. The constituent fibrils of the desired product (cellulose nanofibrils) are too small to resolve by light microscopy and the large flocs of this material are typically presence as extensive regions stained a pale pink colour.

Scanning electron microscopy was performed at a range of magnifications using a Hitachi S-4800 field emission scanning electron microscope. Samples were prepared for imaging by diluting an aliquot of the slurry sampled at an appropriate stage of the processing with deionized water to give an approximate concentration of 0.001 % solids. The diluted sample (20 $\mu$l) was then applied to a muscovite mica disc (9.9mm diameter, 0.22 - 0.27mm thickness - Agar Scientific, UK) and dried for at least 12 hours at reduced pressure (700 mbar) before being introduced to the instrument. Image analysis was performed using ImageJ software (public domain) on an appropriate selection of micrographs taken at the highest magnification (x 45000) - sufficient to allow a statistically appropriate number of fibril width measurements to be taken manually (> 600). Results were expressed as a mean fibril width for the sample.

Oscillatory shear rheometry was perfomed on an AR 1500 controlled stress rheometer (TA Instruments) using a specially designed cup and bob (concentric cylinders) each fabricated with serrated surfaces to eliminate errors from wall slip. The diameter of the inner bob was 28 mm and the outer cup 32 mm. A frequency sweep experiment was performed at a fixed strain amplitude, selected to be well within the linear viscoelastic region of the sample, reducing the frequency in a stepwise manner in the range 100 - 0.01 rad s$^{-1}$. The value of the storage modulus, G', at 50 rad s$^{-1}$ was taken as representative of the consistency of the sample.

A series of 500 ml aliquots of the pulp fibre slurry was subsequently prepared as above, setting the operating pressure drop at 25000 psi and varying the number of processing passes up to a maximum of 10. The results from the characterization of the samples, in terms of the quality of cellulose nanofibrils produced as a function of processing passes through the M-110-EH are summarized in Table 1.

**Table 1 - Characterisation data for nanocellulose dispersions prepared at different levels of processing energy consumption via high shear processing in a swelling solution.**

| Processing passes M -110 - EH | Energy consumption /(kWh/tonne) | Presence of large resistant fragments (qualitative) | Storage modulus at 50 rad s$^{-1}$ / Pa | Mean fibril width (SEM) / nm |
|---|---|---|---|---|
| 3 | 840 | High | 89 | 51.3 |
| 4 | 1120 | Moderate | 350 | 35.6 |
| 5 | 1400 | Moderate | 635 | 27.1 |
| 6 | 1680 | Low | 715 | 21.0 |
| 7 | 1960 | Low | 840 | 20.5 |
| 8 | 2240 | Very Low | 1070 | 14.7 |
| 9 | 2520 | None | 1090 | 14.6 |
| 10 | 2800 | None | 1120 | 14.2 |

The benchmark quality of the cellulose nanofibrils for reference purposes in the context oft he present examples was taken as that following **9 processing passes** through the M-110-EH microfluidizer processor - with an associated processing energy consumption of 2520 kWh/tonne. The benchmark quality was determined on the basis of the general absence of large pulp fibre remnants and the attainment of a target mean fibril width of about less than 15 nm.

**Example 2**

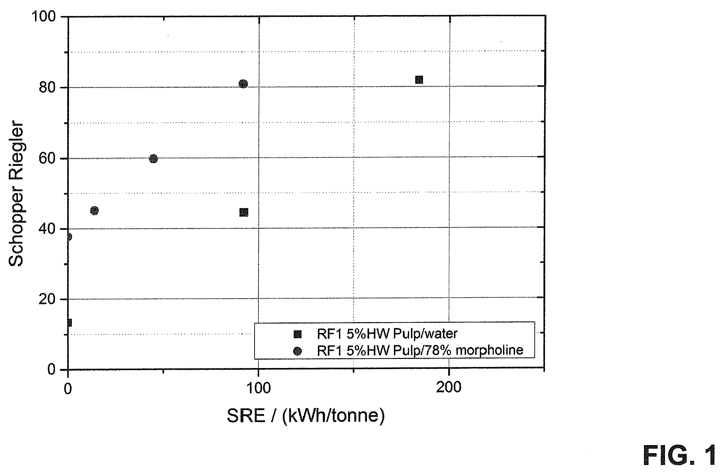

Sulphite wood pulp (100% beech feedstock) in the form of a coarse powder (nominal size ~ 5mm), prepared by knife milling the sheets as supplied, was slurried in a swelling solution of 78% w/w aqueous morpholine by mixing in an enclosed hydropulper unit for 20 mins (sufficient time to allow the particles of pulp to disintegrate). The consistency of the slurry was fixed at 5% solids. This slurry was then recirculated through an OptiFiner RF1 pilot scale refiner (Valmet). Samples of the pulp slurry where taken periodically throughout the process of comminution in the swelling agent. The extent of comminution during refining was characterized by means of monitoring of the Freeness of the slurry and assignation of a Schopper Riegler (SR) value according to ISO 5267/1. The corresponding energy consumption of the process was assigned in terms of Specific Refining Energy (SRE), determined from application of the Specific Edge Load approach developed from the work of Wultsch and Flucher and subsequently by Brecht and Siewert. A further sample at identical consistency (5% solids) in which water was employed as the processing medium was also prepared for comparative purposes and to further illustrate the efficacy of the 78% w/w aqueous morpholine swelling solution in promoting comminution of the pulp fibres during refining. The Freeness of the pulp slurry developed as a function of Specific Refining Energy is plotted in Figure 1 and data tabulated in Table 2.

**Table 2**

| Refining (intermediate comminution step) in H$_2$O - OptiFiner RF 1 (Valmet) | | Refining in 78% w/w aq. morpholine (swelling solution) - Optifiner RF 1 (Valmet) | |
|---|---|---|---|
| **Specific Refining Energy /(kWh/tonne)** | **SR Freeness** | **Specific Refining Energy /(kWh/tonne)** | **SR Freeness** |
| 0 | 13 | 0 | 38 |
| 92.4 | 45 | 13.9 | 45 |
| 184 | 82 | 44.9 | 60 |
| | | 91.9 | 81 |

Aliquots (100 g) of the pulp slurry, subjected to comminution at a Specific Refining Energy of ~ 91.9 kWh/tonne in the OptiFiner RF1 as above, were diluted to a consistency of 1% solids by addition of 78% w/w aqueous morpholine (400 g). Each was then subjected to an additional high shear homogenization step by passing repeatedly through the M-110-EH microfluidizer processor (configured as in Example 1). Each sample was characterized in terms of presence of resistant pulp fibre fragments, rheology (G' at 50 rad s$^{-1}$) and mean fibril width (SEM) using the methods defined in Example 1 and the results expressed as a function of overall energy consumption (intermediate comminution + high shear homogenisation) in Table 3. The % reduction in overall energy consumption when compared to the benchmark conditions of Example 1 (9 passes, M-110-EH) are summarized in Table 4.

**Table 3 - Characterisation data for a nanocellulose dispersion, prepared via a combination of swelling, refining (intermediate comminution step) and high shear homogenization (M-110-EH microfluidizer processor)**

| Energy consumption (comminution) / (kWh/tonne) | Processing passes M-110-EH (high shear homogenization) | Energy consumption (high shear homogenization) / (kWh/tonne) | Overall Energy comsumption / kWh/tonne | Presence of large resistant fragments (qualitative) | Storage Modulus, G' / Pa | Mean fibril width (SEM)/ nm |
|---|---|---|---|---|---|---|
| 91.9 | 1 | 280 | 371.9 | Very low | 1100 | 16.1 |
| 91.9 | 2 | 560 | 651.9 | None | 1270 | 14.5 |
| 91.9 | 3 | 840 | 931.9 | None | 1390 | 13.7 |

**Table 4 - Comparison between the overall energy consumption for the production of nanocellulose dispersion via a combination of swelling, refining (intermediate comminution step) and high shear homogenization (M-110-EH microfluifdizer processor) vs. the overall energy consumption for the production of nanocellulose dispersion via the process according Example 1 of swelling and high shear homogenization (M-110-EH microfluifdizer processor).**

| Energy consumption (comminution step) / (kWh/tonne) | Processing passes M-110-EH (high shear homogenization step) | Energy consumption (high shear homogenization step) /(kWh/tonne) | Overall energy comsumption (comminution + homogenisation) / (kWh/tonne) | Overall energy comsumption according to Example 1 (omitting comminution step) /(kWh/tonne) | % Reduction in overall energy consumption |
|---|---|---|---|---|---|
| 91.9 | 1 | 280 | 371.9 | 2520 | **85.2 %** |
| 91.9 | 2 | 560 | 651.9 | 2520 | **74.1 %** |
| 91.9 | 3 | 840 | 931.9 | 2520 | **66.6 %** |

**Conclusion**

Thus, as can be seen from Table 4, the introduction of a refining step (i.e. the intermediate step) in the process for the production of a nanocellulose dispersion from a base cellulosic material <u>after</u> the initial step of swelling, and <u>before</u> the final step of homogenizing through high shear or high pressure to form the nanocellulose dispersion allows to dramatically decrease the energy needed to arrive at a nanocellulose dispersion of a quality. When looking at the above data, the energy needed to yield a nanocellulose dispersion having a mean fibril width of about 14.5 nm as determined by SEM could be reduced by almost 75% by carrying out a process including an intermediate refining step (651.9 kWh/t), when compared to a process omitting the intermediate refining step and relying solely on the high shear homogenization (2520 kW/t).

LIST OF REFERENCE SIGNS

none

**Claims**

1.    A process for reducing the overall energy consumption in the production of a nanocellulose dispersion from a base cellulosic material comprising, in this order:

(i) a step of swelling the base cellulosic material in an swelling solution until a predetermined amount of swelling is achieved to form a dispersion of swollen cellulosic material in the swelling solution,

(ii) an intermediate step consisting of a step of comminuting the dispersion of swollen cellulosic material through low or medium shear to form a dispersion of comminuted cellulosic material in swelling solution having a predetermined degree of fineness and

(iii) a step of homogenizing the dispersion of comminuted cellulosic material through high shear or high pressure to form the nanocellulose dispersion.

2. The process for reducing the overall energy consumption in the production of a nanocellulose dispersion from a base cellulosic material according to claim 1, wherein the swelling solution is an aqueous solution of morpholine, piperidine or mixtures thereof, preferably comprising of from 60 to 99% (by weight) morpholine, piperidine or mixtures thereof, more preferably of from 70 to 95% (by weight) of morpholine, piperidine or mixtures thereof, most preferably of from 73 to 83% (by weight) of morpholine, piperidine or mixtures thereof.

3. The process for reducing the overall energy consumption in the production of a nanocellulose dispersion from a base cellulosic material according to claim 1 or 2, wherein comminuting the dispersion of swollen cellulosic material through low or medium shear to form a dispersion of comminuted cellulosic material is carried out in a beater or refiner, preferably in a refiner, more preferably in a conical or double-disc refiner and/or homogenizing the dispersion of comminuted cellulosic material through high shear or high pressure is carried out in a high pressure or high shear homogenizer such as a microfluidizer.

4. The process for reducing the overall energy consumption in the production of a nanocellulose dispersion from a base cellulosic material according to any preceding claim, wherein the process further includes, after (ii) and before (iii), a step (iia) of adding an amount of swelling solution chosen such as to form a dispersion of comminuted cellulosic material in swelling solution having a consistency being of from 2- to 25-times, or preferably of from 2- to 10 times, inferior to the consistency of the dispersion of comminuted cellulosic material in swelling solution of step (ii).

5. The process for reducing the overall energy consumption in the production of a nanocellulose dispersion from a base cellulosic material according to any of claims 1 to 3, wherein the process further includes, after (ii) and before (iii), a step (iib) step of exchanging the swelling solution of the dispersion of comminuted cellulosic material in swelling solution for water in order to form a dispersion of comminuted cellulosic material in water and having a predetermined degree of fineness, and the nanocellulose dispersion formed in the step (iii) of homogenizing the formed dispersion of comminuted cellulosic material in water is preferably in the form of a nanocellulose hydrogel, and optionally the amount of water is chosen such as to form a dispersion of comminuted cellulosic material in water having a consistency being of from 2- to 25-times, or preferably of from 2- to 10 times, inferior when compared to the consistency of the dispersion of comminuted cellulosic material in swelling solution.

6. The process for reducing the overall energy consumption in the production of a nanocellulose dispersion from a base cellulosic material according to any of claims 1 to 3, wherein the process further includes, after (ii) and before (iii), a step (iic) of exchanging the swelling solution of the dispersion of comminuted cellulosic material in swelling solution for an organic solvent in order to form a dispersion of comminuted cellulosic material in organic solvent and having a predetermined degree of fineness, and the nanocellulose dispersion formed in the step (iii) of homogenizing the formed dispersion of comminuted cellulosic material in organic solvent is preferably in the form of a nanocellulose organogel, with the proviso that the organic solvent is chosen such that it is not capable of swelling or dissolving cellulose at standard conditions, and optionally the amount of organic solvent is chosen such as to form a dispersion of comminuted cellulosic material in organic solvent having a consistency being of from 2- to 25-times, or preferably of from 2-to 10 times, inferior when compared to the consistency of the dispersion of comminuted cellulosic material in swelling solution.

7. The process for reducing the overall energy consumption in the production of a nanocellulose dispersion from a base cellulosic material according to claim 5, wherein the organic solvent is an C1-C6 alcohol, preferably a monohydric alcohol such as a linear or branched C1-C6 alkyl alcohol or a C5-C6 cycloalkyl alcohol; a polyhydric alcohol such as C2-C3 diols or triols (ethylene glycol, propylene glycol or glycerol).

8. The process for reducing the overall energy consumption in the production of a nanocellulose dispersion from a base cellulosic material according to any preceding claim, wherein the low or medium shear to form a dispersion of comminuted cellulosic material in swelling solution is of no more than $7.5*10^6$ s$^{-1}$, or from $10^5$ to $7.5*10^6$ s$^{-1}$, or of from $10^6$ to $7.5*10^6$ s$^{-1}$ and/or the high shear to form the nanocellulose dispersion is of more than $7.5*10^6$ s$^{-1}$, or of from more than $7.5*10^6$ s$^{-1}$ to $1.5*10^7$ s$^{-1}$, and the high pressure is of no less than 5000 psi, or of from no less than 5000 psi to 65000 psi.

9. A nanocellulose dispersion obtained according to the process of any preceding claims, wherein at least 70% of the cellulose fibres of the nanocellulose dispersion have a fibre length of less no more than 1.20 mm and/or a mean fibril width of 5-30 nm and most preferably in the range of 5-20 nm.

10. A hydrogel obtained according to the process of claim 5, wherein at least 70% of the cellulose fibres of the nanocellulose dispersion have a fibre length of less no more than 1.20 mm and/or a mean fibril width of 5-30 nm and most preferably in the range of 5-20 nm

11. An organogel according to the process of claim 6, wherein at least 70% of the cellulose fibres of the nanocellulose dispersion have a fibre length of less no more than 1.20 mm and/or a mean fibril width of 5-30 nm and most preferably in the range of 5-20 nm.

FIG. 1

Schopper Riegler

SRE / (kWh/tonne)

RF1 5%HW Pulp/water
RF1 5%HW Pulp/78% morpholine

FIG. 2

x45000 x25000 x500 x400

3d 3c 3b 3a

FIG. 3

Europäisches
Patentamt

European
Patent Office

Office européen
des brevets

**EUROPEAN SEARCH REPORT**

Application Number

EP 15 19 8088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/184438 A1 (UPM KYMMENE CORP [FI]) 20 November 2014 (2014-11-20) | 1,3,4, 8-10 | INV. D21D1/02 D21D1/20 |
| Y | * page 3, line 7 - page 5, line 27 * <br> * page 6, line 5 - page 6, line 27 * <br> * page 7, lines 22-33 * | 2 | |
| X | WO 2008/027096 A1 (KX INDUSTRIES LP [US]; SUTHAR ANIL C [IN]; KOSLOW EVAN E [US]) 6 March 2008 (2008-03-06) <br> * page 8, line 18 - page 9, line 2 * <br> * page 11, line 18 - page 13, line 8 * | 1,3,8 | |
| Y,D | WO 2014/009517 A1 (SAPPI NETHERLANDS SERVICES BV [NL]) 16 January 2014 (2014-01-16) <br> * page 3, line 16 - page 4, line 26 * | 2 | |

TECHNICAL FIELDS
SEARCHED      (IPC)

D21D

The present search report has been drawn up for all claims

| Place of search | Date of completion of the search | Examiner |
|---|---|---|
| Munich | 12 May 2016 | Pregetter, Mario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 19 8088

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2016

| Patent document cited in search report | | Publication date | Patent family member(s) | | Publication date |
|---|---|---|---|---|---|
| WO 2014184438 | A1 | 20-11-2014 | CA | 2910628 A1 | 20-11-2014 |
| | | | CN | 105229229 A | 06-01-2016 |
| | | | EP | 2997190 A1 | 23-03-2016 |
| | | | US | 2016102433 A1 | 14-04-2016 |
| | | | UY | 35565 A | 31-12-2014 |
| | | | WO | 2014184438 A1 | 20-11-2014 |
| WO 2008027096 | A1 | 06-03-2008 | CA | 2661230 A1 | 06-03-2008 |
| | | | EP | 2057306 A1 | 13-05-2009 |
| | | | JP | 5144664 B2 | 13-02-2013 |
| | | | JP | 2010502848 A | 28-01-2010 |
| | | | KR | 20090045280 A | 07-05-2009 |
| | | | TW | 200811333 A | 01-03-2008 |
| | | | US | 2008057307 A1 | 06-03-2008 |
| | | | WO | 2008027096 A1 | 06-03-2008 |
| WO 2014009517 | A1 | 16-01-2014 | AU | 2013288608 A1 | 04-12-2014 |
| | | | CA | 2874414 A1 | 16-01-2014 |
| | | | CN | 104470951 A | 25-03-2015 |
| | | | EP | 2712364 A1 | 02-04-2014 |
| | | | JP | 2015522097 A | 03-08-2015 |
| | | | KR | 20150034686 A | 03-04-2015 |
| | | | US | 2015158955 A1 | 11-06-2015 |
| | | | WO | 2014009517 A1 | 16-01-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014009517 A1
- WO 2012089930 A1
- WO 2012072874 A1
- US 6214163 B1
- WO 2012175806 A1

**Non-patent literature cited in the description**

- The Polymer Handbook 3rd edition. J Wiley & Sons, 1989
- Smook, Handbook for Pulp & Paper Technologists. Tappi Press, 1992
- **HUBBE et al.** Cellulose Nanocomposites: A Review. *BioResources,* 2008, vol. 3 (3), 929-980